(19) Europäisches Patentamt
European Patent Office
Office européen des brevets

(11) **EP 2 733 520 A2**

(12) **EUROPEAN PATENT APPLICATION**

(43) Date of publication:
**21.05.2014 Bulletin 2014/21**

(51) Int Cl.:
***G02F 1/09*** *(2006.01)*

(21) Application number: **13192295.7**

(22) Date of filing: **11.11.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.11.2012 US 201261727494 P**
**07.11.2013 US 201314073616**

(71) Applicant: **Electro-Optics Technology, Inc.**
**Traverse City, MI 49684 (US)**

(72) Inventor: **Jalali, Amir A.**
**Traverse City, MI Michigan 49696 (US)**

(74) Representative: **Eisenführ Speiser**
**Patentanwälte Rechtsanwälte PartGmbB**
**Johannes-Brahms-Platz 1**
**20355 Hamburg (DE)**

(54) **Broadband semiconductor faraday effect devices in the infrared**

(57) A Faraday rotator is formed of a class of semiconductor materials of low free carrier density wherein, in the presence of a suitable magnetic field, interband transition Faraday rotation is opposite in sign from free carrier effect Faraday rotation and interband transition Faraday rotation predominates over free carrier effect Faraday rotation such that net Faraday rotation can remain nearly unchanged over broad IR spectral regions where the short wavelength limit is typically near the bandgap absorption. Thus, the class of semiconductors meeting these conditions can function as high performance broadband optical isolators in the infrared. Suitable materials include InAs of suitable purity.

FIG. 1

EP 2 733 520 A2

## Description

### CROSS-REFERENCES TO RELATED APPLICATIONS

This application claims benefit under U.S. Provisional Patent Application Serial Number 61/727,494 filed November 16, 2013 and U.S. Patent Application Serial No. 14/,073,616 filed November 6, 2013 which are incorporated herein for all purposes.

### STATEMENT AS TO RIGHTS TO INVENTIONS MADE UNDER FEDERALLY SPONSORED RESEARCH AND DEVELOPMENT

NOT APPLICABLE

### REFERENCE TO A "SEQUENCE LISTING," A TABLE, OR A COMPUTER PROGRAM LISTING APPENDIX SUBMITTED ON A COMPACT DISK

NOT APPLICABLE

### BACKGROUND OF THE INVENTION

This invention relates generally to broadband Faraday effect devices such as optical isolators for use with lasers in the infrared spectral region. The invention is useful with quantum cascade laser diodes, quantum cascade laser diode arrays, fiber lasers with or without nonlinear frequency conversion, $CO_2$ and other infrared gas lasers, or any type of infrared laser source having broadband gain which is sensitive to optical feedback.

Most materials have a rich spectroscopic fingerprint in the infrared. This has resulted in a high level of interest in broadly tunable laser sources such as quantum cascade diode lasers in this wavelength region. Typical applications for quantum cascade diode lasers are exemplified by laboratory and remote environmental sensing of harmful materials and gases using various spectroscopic techniques. For remote sensing applications, the power levels available can be increased by amplifying quantum cascade diode lasers directly with solid state or fiber laser broadband amplifiers or by broadband nonlinear frequency extension methods pumped by solid state and fiber lasers. $CO_2$ lasers are another example of lasers which have gain over broad wavelength ranges in the infrared. Using $CO_2$ laser systems based upon feedback sensitive $CO_2$ laser oscillators followed by $CO_2$ power amplifiers to efficiently make plasmas necessary for extreme ultra-violet generation at 13.5nm is currently envisioned as an enabling technology for future compact and energy efficient semiconductor devices. All of these applications benefit from 100% coupling between the laser source and respective application target. Many of the laser sources named above are very sensitive to optical feedback. Hence minimizing optical feedback into the laser cavity is important for laser stability and/or preventing damage of laser components. In waveguide lasers such as quantum cascade diode lasers, the return radiation can couple into the laser creating modal instability and resulting frequency instability and/or optical damage of diode laser facets. In more powerful laser systems, such as the $CO_2$ laser system for EUV described above, a weak reflected pulse of light traveling in the reverse direction may get amplified in the amplifier section(s) of the laser and cause damage to the oscillator or otherwise cause the $CO_2$ laser oscillator to become unstable.

Optical isolators are routinely used to decouple a laser oscillator from downstream laser amplifier noise radiation and/or target reflections. Optical isolators use Faraday effect rotation by using a magneto-optical material in a strong magnetic field co-axial with the laser radiation to rotate the plane of polarization 45°. Surrounding the Faraday rotator by polarizers aligned with the input and output linear polarization states completes the optical isolator. Because Faraday effect rotation is non-reciprocal (i.e. the sense of rotation does not depend upon the direction of propagation), any backward propagating radiation will have the plane of linear polarization rotated a further 45° resulting in a polarization state which is 90° to the transmission axis of the input polarizer -where it will consequently experience high backward transmission loss. This reverse radiation loss is typically on the order of 30dB for single stage optical isolators.

The magnitude of Faraday rotation in magneto-optic materials used in optical isolators normally has wavelength dependence or dispersion. As a result, an optical isolator will typically only have high isolation at a specific wavelength. Techniques have been developed to compensate for the normal Faraday rotation dispersion of magneto-optic materials. Many of these techniques have relied upon the wavelength dispersion of optical rotators and/or waveplates to compensate for the Faraday rotation dispersion in the isolation direction in the visible and near infrared spectral regions [U.S. Patent 4,712,880, 12/1987, Shirasaki, M., "Polarization rotation compensator and optical isolator using the same"; and P.A. Schulz "Wavelength independent Faraday isolator", Appl. Opt. 28, 4458-4464 (1989)]. However, because the available materials (and consequently available dispersion) of optical rotators and waveplates are limited in the infrared, this technique has not yet resulted in commercially viable broadband optical isolators in the infrared. Further, although this method can give broadband isolation in the visible and near infrared, all dispersions add in the forward transmitting direction. This leads to reduced transmission away from a central design wavelength relative to conventional narrow band optical isolators. In the $1.55\mu m$ band used for telecommunications, namely, from $1.5\mu m$ to $1.62\mu m$, iron garnets have been doped with various rare earth elements to achieve nearly flat Faraday rotation over broad wavelength ranges [Z.C. Xu, M. Huang and M. Li, "A compounded rare-earth iron garnet single crystal exhibiting stable Faraday rotation against wavelength and temperature variation in the

1.55μm band," J. Magnetism and Magnetic Materials 307 (2006) 74-76]. These efforts have not been applied to longer wavelengths due in part to the fact that currently known garnets become opaque above 6μm [D.L. Wood and J.P. Remeika, "Effect of impurities on the optical properties of yttrium iron garnet," J. Appl. Phys. 38, 1038-1045 (1967)]. There have been some efforts and reports citing large Faraday rotation in semiconductors due to free carrier effects with reasonable transmission over a wide range of infrared wavelengths. The performance of these materials has shown the most promise however only with cryogenic cooling [A.V. Starobor, D.S. Zheleznov, O.V. Palashov, and E.A. Khazanov," Magnetoactive media for cryogenic Faraday isolators," J. Opt. Soc. Am. B 28, 1409-1415 (2011) and W.T. Boord and Y.H. Pao and F.W. Phelps and P.C. Claspy, "Far-infrared radiation isolator," IEEE J. Quantum Electron. 10, 273-279 (1974)]. To date, no infrared broadband optical isolation or infrared broadband optical isolator has been reported.

The following is background information that describes the Faraday effect. The Faraday effect is a fundamental physics phenomenon wherein the plane of polarization of linearly polarized light is rotated about the propagation axes in a magneto-optical medium which is magnetized parallel to the direction of light propagation. A magneto-optical material under external magnetic field exhibits different phase velocities for right and left circularly polarized light. The amount of specific polarization rotation (rotation per unit length) is given by:

$$\theta = \frac{1}{2}k_0(n_- - n_+),$$

where $k_0$ is the vacuum propagation wave vector, $n_+(n_-)$ is the refractive index for right (left) circular polarized light. The different phase velocities for right and left circularly polarized light result in rotation of a linear polarization $\theta$, known as Faraday rotation, when light propagates through a magneto-optic material of length $L$ in the presence of a magnetic field $B$ in the direction of propagation the resulting polarization rotation angle is commonly expressed as:

$$\theta = V \times B \times L$$

Where the Verdet constant $V$ quantifies how efficiently the magneto-optic material will perform as a Faraday rotator. Unlike polarization in optical rotators (such as quartz), Faraday rotation θ is *non-reciprocal* - the sense of rotation is independent of the direction of light through the magneto-optic medium.

Faraday rotation in semiconductor materials has been observed for many years [B. Lax and Y. Nishina " Interband Faraday Rotation in III-V Compounds," J. Appl. Phys. 32, 2128 (1961)]. At photon energies far from a bandgap, this Faraday rotation was known to predominantly result from free carrier effects with some minor additional Faraday rotation, particularly at low free carrier density, also attributed to interband (bound carrier) transitions. Near an absorptive bandgap, Faraday rotation due to interband transitions is known to become very large but unusable because the semiconductor material becomes opaque. In some semiconductors, including InAs, these two effects have been known to have opposite sign of polarization rotation [M. Cardona, "Electron effective masses of InAs and GaAs as a function of temperature and doping," Phys. Rev. 121, 752-758 (1961)]. The presence of two competing Faraday rotation mechanisms, interband transitions and free carrier effects, together with unpredictable free carrier density due to impurities, has complicated the design of an isolator based on semiconductors materials.

Faraday rotation contributions due to the free carrier effect make the device highly dependent on the type of, amount of, and uniformity of the doping. A small variation in Faraday rotation in the isolator crystal will show a limiting extinction of:

$$10 \log \left(\frac{\pi}{4}\frac{\Delta\theta}{\theta}\right)^2$$

For example, only 10 percent variation in doping material in a semiconductor corresponds to 10 percent variation in Faraday rotation, and according to the above relation it gives about 22 dB extinction limit. It can be difficult to dope semiconductors crystals to such doping level tolerances. For example, because dopants are not preferentially incorporated into the crystal lattice in Czochralski growth of semiconductor crystals such as InAs, the dopant level is typically twice as high near the seed end relative to the dopant concentration at the tail end of a growth boule [InAs dopant specifications from InAs data sheet, Wafer Technology LTD, Milton Keynes, UK, www.wafertech.co.uk]. This large amount of doping non-uniformity makes it difficult to consistently produce practical optical isolator products based upon doped semiconductors.

Historically, undoped semiconductors such as InAs have also had variations in free carrier density due to difficulties in controlling impurity levels in early effort semiconductor crystal growth. This gave conflicting and unpredictable results regarding the contributions to Faraday rotation from interband transitions versus free carrier effects in pioneering research [E.D. Palik, S. Teitler, and R.F. Wallis, "Free carrier cyclotron resonance, Faraday rotation, and voigt double refraction in compound semiconductors," J. Appl. Phys. 32, 2132(1961)]. For this reason, and because of the large increase in Faraday rotation away from the bandgap achievable with higher free carrier density, most known studies of Faraday rotation in semiconductor materials have focused upon doped substrates where the free carrier density is large and predominant over any Faraday rotation due to interband transitions.

What is needed is an efficient room-temperature broadband Faraday rotator operative in the infrared suitable for use in Faraday effect devices such as optical isolators and circulators.

## SUMMARY OF THE INVENTION

In accordance with this invention, a Faraday rotator for use in Faraday rotation applications is formed of a class of semiconductor materials of a low free carrier density wherein, in the presence of a suitable magnetic field, interband transition-type Faraday rotation is opposite in sign from free carrier effect-type Faraday rotation and wherein interband transition-type Faraday rotation predominates over free carrier effect-type Faraday rotation such that net Faraday rotation is nearly independent of frequency and can remain nearly unchanged over broad IR spectral regions where the short wavelength limit is typically near the bandgap absorption. This class of semiconductor materials is a departure from known prior art employed to achieve Faraday rotation in the infrared. Thus, the class of semiconductor materials meeting these conditions can function as high performance broadband optical isolators in the infrared spectral region.

In a specific embodiment of the invention the low free carrier density semiconductor is undoped Indium Arsenide (InAs) with a direct bandgap energy = 0.345eV corresponding to $3.55 \mu m$.. Near the bandgap at $3.55 \mu m$, interband transition-type Faraday rotation dominates free carrier effect-type Faraday rotation. Indium arsenide meets the criterion of having opposite sign Faraday rotation due to interband transitions and free carrier effects. In addition, it has a wide bandgap that thermally induced carrier concentration at room temperature has insignificant influence on free carrier concentration. This enables broadband Faraday rotation suitable for use in a broadband isolator extending from $4 \mu m$ to $7 \mu m$ in the mid-infrared.

The broadband infrared Faraday rotation of this invention is applicable in any commonly used device which is based upon Faraday effect rotation such as optical isolators, optical circulators and Faraday mirrors. The optical isolators and optical circulators may be either polarization maintaining (PM) or polarization independent (PI) by any of the means commonly known in the art. Faraday effect rotation in accordance with the invention may be used in any of the commonly used configurations such as rod and slab shapes and/or multipass or thin-disk designs.

## BRIEF DESCRIPTION OF THE DRAWINGS

FIG. 1 is a depiction of a generic Faraday rotator device according to the invention.

FIG. 2 is a plot fitting Faraday rotation data at 4.55, 7.5 and $10.6 \mu m$ to a theoretical curve based upon interband transitions and free carrier effects.

FIG. 3 is a plot of the magnet field profile used in the preferred embodiment.

FIG. 4 is a plot of the transmission spectrum for 1mm thick undoped InAs wafer with a free carrier density of $N=2.5 \times 10^{16} cm^{-3}$.

## DETAILED DESCRIPTION OF THE INVENTION

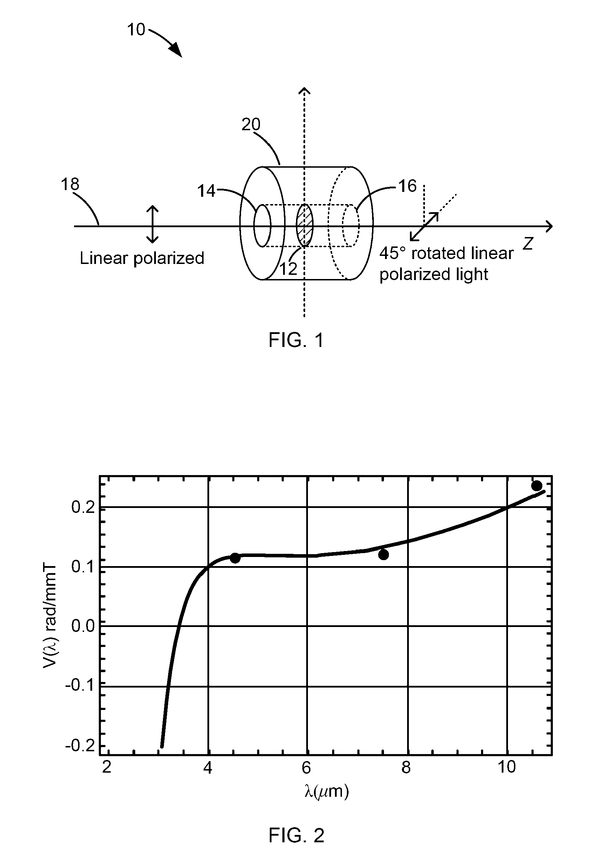

FIG. 1 illustrates a generic Faraday rotator 10 incorporating a semiconductor material 12 in accordance with the invention. The rotator 10 includes an optical input port 14 and an optical output port 16 with an optical path 18 therebetween. A magnet 20 is provided to provide a magnetic field along the optical path 18. The semiconductor material 12 according to the invention is disposed along the optical path 18 and has the characteristics as herein described, namely, in the presence of a suitable magnetic field, interband transition-type Faraday rotation is opposite in sign from free carrier effect-type Faraday rotation and interband transition Faraday rotation predominates over free carrier effect Faraday rotation such that net Faraday rotation can remain nearly unchanged over broad IR spectral regions where the short wavelength limit is typically near the bandgap absorption.

FIG. 2 shows a plot of an effect useful according to the invention but heretofore unexploited. According to the invention, it has been discovered that undoped InAs semiconductor substrate materials with a specified low free carrier density of less than about $3.0 \times 10^{16} cm^{-3}$ and more specifically between about $2.0 \times 10^{16} cm^{-3}$ and $2.5 \times 10^{16} cm^{-3}$ has Faraday rotation and optical absorption characteristics nearly independent of wavelength in the mid-IR range of $4 \mu m$ to $7 \mu m$. Unlike many historical results where Faraday rotation was dominated by free carriers due to impurities or intentional doping, Faraday rotation in undoped InAs near the bandgap at $4 \mu m$ predominates due to contributions from the interband transitions in the aforementioned wavelength range with a relatively minor contribution from the low free carrier density. Although the Faraday rotation attributable to interband transitions is the dominant effect at low free carrier density near the bandgap, the residual free carrier density gives Faraday rotation of opposite sign and sufficient magnitude and dispersion to substantially compensate the dispersion of the interband transition Faraday rotation. This superposition of these two contributions to Faraday rotation in the undoped InAs wafers notably results in substantially flat Faraday rotation across the spectral range of 4 to 7μm. This is the phenomenon shown in FIG. 2. The polarization rotation due to interband transitions is determined by crystal structure and is largely independent of the free carrier density. Using modem crystal growth methods and high purity melt precursors, impurity levels can be well controlled enabling predictable Faraday rotation resulting from interband transitions and residual free carrier Faraday rotation. From data about undoped InAs indicating that the free carrier density from the seed end to the tail end of the growth boule did not vary by more than 5% it can be confirmed that free carrier density can be much better in undoped samples than in doped samples.

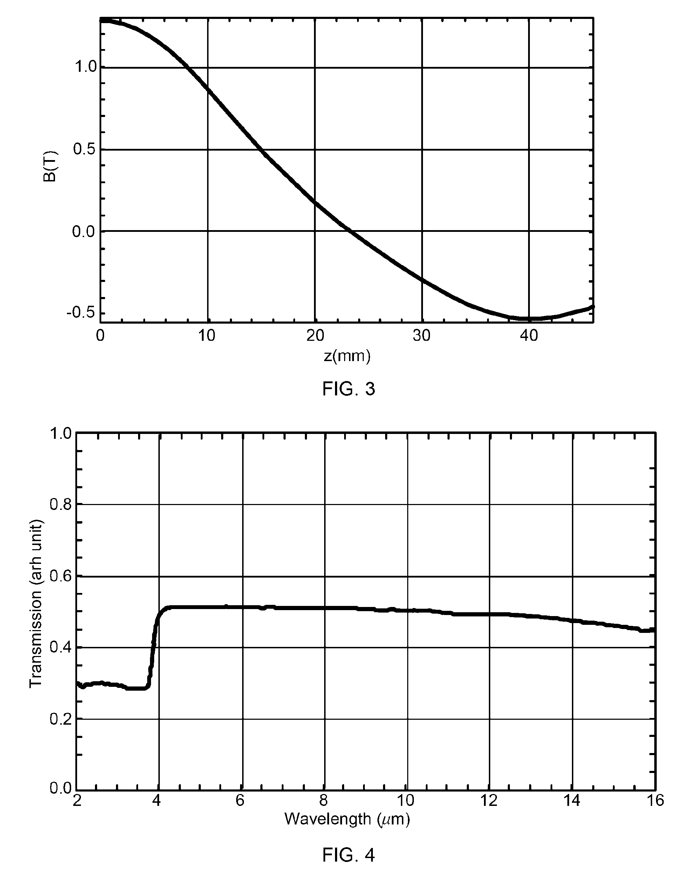

The limits of applicability of the invention can be theoretically understood. Referring to FIG. 2, below the InAs bandgap corresponding to 3.55μm the negative Faraday rotation is shown to increase dramatically as expected due to interband transitions. The FTIR spectrum of InAs shown in FIG. 4 confirms this significant absorption near the bandgap below 4μm. At wavelengths above 7.5μm, the Faraday rotation of InAs shows a linear relationship with the square of wavelength; a characteristic feature of the dominant free carrier effect polarization rotation. However, at shorter wavelengths approaching the bandgap energy (below 7μm) this linear behavior is no longer valid [M. Cardona, "Electron effective masses of InAs and GaAs as a function of temperature and doping,", Phys. Rev. 121, 752-758 (1961)]. As the bandgap energy is approached Faraday rotation becomes increasingly due to interband transitions, and in the case of InAs, it is in the opposite direction of free carrier polarization rotation.

In the case of free carrier Faraday rotation a semi-classical model gives the polarization rotation of a semiconductor wafer of thickness L in a magnetic *field B* as

$$\theta = V \times B \times L$$

where the Verdet constant is given by:

$$V = \frac{\mu_0 N \ q^3 \lambda^2}{8\pi^2 n \ m^{*2} c}.$$

The absorption coefficient is:

$$\alpha = \frac{\mu_0 N \ q^2 \lambda^2}{4\pi^2 n \ m^* c \ \tau} \ ,$$

where n is the material refractive index, *m* * is the carrier effective mass, N is the carrier density, $\tau$ is the effective carrier relaxation time, $\lambda$ is the laser wavelength, c is the speed of light in vacuum, q is electronic charge, and $\mu_o$ is the permeability of free space. The above equations for free carrier Faraday rotation are valid only if the following parameter conditions are satisfied:

$$\omega_r \ll \omega_c \ll \omega \le \omega_p \ll n\omega \ ,$$

where $\omega_r$ is the effective carrier relaxation frequency, $\omega_c$ is the cyclotron frequency, ω is the laser frequency, and $\omega_p$ is the plasma frequency.

In experiments leading to this invention, an undoped InAs wafer was chosen that had residual electron carrier density specified as 2.5 x $10^{16}$ cm$^{-3}$ . The effective mass of free carrier is reported as $0.027m_e$ and effective carrier relaxation time is about 1.4 x $10^{-12}$sec. These values give the results of $\omega_r$ = 0.69 THz, $\omega_c$ = 6.47 THz, and $\omega_p$ = 54.28 THz. However, in the wavelength range of 4μm to 7μm, the respective laser frequencies are $\omega$ = 471.2THz to 269.2THz. Consequently an undoped InAs wafer cannot satisfy the free carrier parameter inequality condition given above because the laser frequency $\omega$ is always substantially greater than the plasma frequency $\omega_p$. Here it can safely be assumed that the Faraday rotation results primarily from interband transitions of undoped InAs.

Some semiconductors including specifically InAs show an opposite sign of Faraday rotation due to interband transitions relative to Faraday rotation due to the free carrier effect. The actual reason is a matter of ongoing research. In FIG. 2 the theoretical Faraday rotation from interband transitions and free carrier effects were summed and fitted to the three experimental points for the InAs sample. At longer wavelengths the Faraday rotation approaches a linear relationship with the square of wavelength, signifying free carrier effect Faraday rotation as expected. Whereas, at shorter wavelengths, this relationship does not apply, and there is a region with balancing between two effects, which results in wavelength stable magneto-optical activity. In the present case, with the choice of InAs with the optimal free carrier density of about 2.5 x $10^{16}$ cm$^{-3}$, the polarization rotation approaches a stable state in the wavelength range of at least 4 μm to 7 μm, evidently due to the balancing of contributions from the two oppositely signed Faraday rotation effects. The short wavelength limit is due to the 0.345 eV band gap energy corresponding to a wavelength of 3.55μm. However, the optimal free carrier density is temperature dependent and is given by

$$N \ \propto T^{3/2} e^{(\mu - E_g)/2k_B T}$$

where Eg is the bandgap energy, $\mu$ is the Fermi level, and $k_B$ is the Boltzmann constant. Therefore, the optimal carrier density would be lower at lower temperatures. The optimal carrier density at zero deg Celsius would be down to around $1.5 \times 10^{16}$ cm$^{-3}$ from $2.5 \times 10^{16}$ cm$^{-3}$.

Two sets of InAs wafers of different thicknesses and low free carrier density were investigated. A 1-mm thick, double-side polished undoped InAs sample from a 2-inch wafer from El-Cat [El-Cat Inc, 160 Hopper Ave, Waldwick, NJ 07463, USA] cut into 10x10 mm square plates, served as Set One. The carrier density of the plate is $2.5 \times 10^{16}$ cm$^{-3}$, as measured by the Hall effect, and the mobility as supplied by the vendor is 22,000 cm/Vs. A high purity undoped InAs 2-inch, 0.5 mm thick, double-side polished sample from Wafer Technology of Milton Keynes, UK, also cut into 10x10 mm square plates served as Set Two. The carrier density measured as $2.0 \times 10^{16}$ cm$^{-3}$, and the mobility is 22,500 cm/Vs as measured by the manufacturer. The InAs plates were sandwiched between two hollow aluminum holders in a copper tube to adjust the wafer position inside a magnet assembly. A non-optimized magnet assembly was used to produce a magnetic field up to 1.27 Torr in the center of the magnet. The magnetic profile is given in FIG. 3. The transmission spectrum (uncorrected for Fresnel reflection loss of the uncoated wafer) of the set one plate by FTIR spectroscopy is presented in FIG. 4. The transmission spectrum of InAs shows a rather flat curve in a wide range of wavelengths from 4 $\mu$m to 9 $\mu$m. Measured Faraday rotation of InAs at two wavelengths was obtained using quantum cascade lasers, one operating at 4.55 $\mu$m and the other one at 7.5 $\mu$m. Set One had a Verdet constant of 6.7 deg/mm-T and 6.9 deg/mm-T at 4.55 $\mu$m and 7.5 $\mu$m wavelengths, respectively, whereas Set Two shows a Verdet constant as 7.0 deg/mm-T at both of the above-listed wavelengths with quantum cascade laser diodes. A Verdet constant was measured at 10.6 $\mu$m of 13.8°/mm-T for both sample sets. In all experiments there was about a 10 percent error in measurement. With a magnet assembly optimized for this application, a 2T magnetic field strength over a 3.2 mm length could easily be reached, which results in over 90% wafer transmission over a broad band of wavelengths for 45° polarization rotation. The isolation ratio for both samples was 24 dB which is relatively high for uncoated samples. Isolation can be expected to exceed 30 dB with broadband anti-reflection coated InAs wafers.

In accordance with the invention, low free carrier density undoped InAs exhibits stable Faraday rotation in the broad band mid-IR wavelength of 4 $\mu$m to 7 $\mu$m. Recent developments and improvements in InAs wafer quality permits one to take advantage of the interband transition Faraday rotation near the bandgap of low free carrier density semiconductors to make practical Faraday rotators for such applications as broadband optical isolators. InAs wafers now readily available from respected semiconductor vendors, together with high performance permanent magnet assemblies and recently released high quality wire grid polarizers from Moxtek [Moxtek, Inc., 452 W 1260 N, Orem, UT 84057, USA] with better than 98% transmission and 30 dB extinction in the mid-infrared enable high performance broadband mid-IR optical isolators. These low free carrier density InAs based broadband mid-IR optical isolators are suitable for use with application specific discrete wavelength lasers or tunable mid-IR laser sources suitable for a wide range of applications and devices operative in the mid-IR from 4 $\mu$m to 7 $\mu$m.

The broadband infrared Faraday rotation of this invention is applicable as is generally known in the art to any commonly used optical device which is based upon Faraday effect rotation such as optical isolators, optical circulators and Faraday mirrors. The optical isolators and optical circulators may be either polarization-maintaining (PM) or polarization-independent (PI) by any of the means commonly known in the art. Faraday effect rotation in accordance with the invention may be used in accordance with the known art in any commonly used configurations such as rod and slab shapes and/or multipass or thin disk designs.

The invention has been explained with respect to specific embodiments. Other embodiments will be evident to those of ordinary skill in the art. Therefore, it is not intended that this invention be limited, except as indicated by the appended claims.

**Claims**

1. A broadband infrared Faraday rotator comprising:

   an optical input port;
   an optical output port;
   a semiconductor material disposed along a light path between the optical input port and the optical output port, said semiconductor material having low free carrier density and capable of Faraday rotation of a sign due to interband transitions opposite of free carrier effects, said Faraday rotation due to said interband transitions and said free carrier effects resulting in stable net Faraday rotation over a broad infrared wavelength range; and
   a magnet providing a magnetic field coaxial with the optical path and of sufficient strength to induce at least 45 degrees of Faraday rotation of the semiconductor material.

2. The Faraday rotator of claim 1 wherein said low free carrier density is sufficiently low that said Faraday rotation due to said interband transitions is predominant as a source at the short wavelength limit near the bandgap of said stable net Faraday rotation over broad infrared wavelength range.

3. The Faraday rotator of claim 1 wherein said semiconductor material is undoped.

**4.** The Faraday rotator of claim 1 wherein said semiconductor material is Indium Arsenide (InAs).

**5.** The Faraday rotator of claim 4 wherein said Indium Arsenide semiconductor material has a free carrier density of less than about $3 \times 10^{16} \text{cm}^{-3}$ at room temperature such that the Indium Arsenide semiconductor material has Faraday rotation and optical absorption characteristics nearly independent of wavelength in the mid-IR range.

**6.** The Faraday rotator of claim **4** wherein said Indium Arsenide semiconductor material has a free carrier density in the range of $2 \times 10^{16} \text{cm}^{-3}$ to $3 \times 10^{16} \text{cm}^{-3}$ at room temperature and said stable net Faraday rotation over said infrared wavelength range is inclusive of the wavelengths between $4\mu\text{m}$ and $7\mu\text{m}$.

**7.** The Faraday rotator of claim 1 configured to form an element of a broadband Faraday effect device suitable for use in at least one of an optical isolator, a Faraday mirror, and an optical circulator.

**8.** A broadband infrared Faraday rotator comprising:

an optical input port;
an optical output port;
a semiconductor material disposed along a light path between the optical input port and the optical output port, said semiconductor material having low free carrier density and capable of Faraday rotation of a sign due to interband transitions opposite of free carrier effects, said Faraday rotation due to said interband transitions and said free carrier effects resulting in stable net Faraday rotation over a broad infrared wavelength range;
a magnet providing a magnetic field coaxial with the optical path and of sufficient strength to induce at least 45 degrees of Faraday rotation of the semiconductor material.
wherein the Faraday rotation $\theta$ of the semiconductor wafer of thickness L in the magnetic field B due to free carrier effect is given by:

$$\theta = V \times B \times L$$

the Verdet constant *V* being given by:

$$V = \frac{\mu_0 N \, q^3 \lambda^2}{8\pi^2 n \, m^{*2} c} .$$

wherein the semiconductor material has an absorption coefficient given by:

$$\alpha = \frac{\mu_0 N \, q^2 \lambda^2}{4\pi^2 n \, m^* c \, \tau} ,$$

where n is the material refractive index, m * is the carrier effective mass, N is the carrier density, $\tau$ is the effective carrier relaxation time, $\lambda$ is the laser wavelength, c is the speed of light in vacuum, and $\mu_0$ is the permeability of free space, for laser frequencies satisfying the relation:

$$\omega_r \ll \omega_c \ll \omega \le \omega_p \ll n\omega ,$$

where $\omega_r$ is the effective carrier relaxation frequency, $\omega_c$ is the cyclotron frequency, is the laser frequency, and $\omega_p$ is the plasma frequency.

**9.** An optical isolator incorporating a broadband infrared Faraday rotator comprising:

an optical input port;
an optical output port;
a semiconductor material disposed along a light path between the optical input port and the optical output port, said semiconductor material having low free carrier density and capable of Faraday rotation of a sign due to interband transitions opposite of free carrier effects, said Faraday rotation due to said interband transitions and said free carrier effects resulting in stable net Faraday rotation over a broad infrared wavelength range;
a magnet providing a magnetic field coaxial with the optical path and of sufficient strength to induce at least 45 degrees of Faraday rotation of the semiconductor material;
a first polarizer between the optical input port and the semiconductor material: and
a second polarizer between the optical output port and the semiconductor material.

FIG. 1

FIG. 2

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 61727494 A
- US 07361613 A

- US 4712880 A, Shirasaki, M.

### Non-patent literature cited in the description

- **P.A. SCHULZ.** Wavelength independent Faraday isolator. *Appl. Opt.,* 1989, vol. 28, 4458-4464
- **Z.C. XU ; M. HUANG ; M. LI.** A compounded rare-earth iron garnet single crystal exhibiting stable Faraday rotation against wavelength and temperature variation in the 1.55μm band. *J. Magnetism and Magnetic Materials,* 2006, vol. 307, 74-76
- **D.L. WOOD ; J.P. REMEIKA.** Effect of impurities on the optical properties of yttrium iron garnet. *J. Appl. Phys.,* 1967, vol. 38, 1038-1045
- **A.V. STAROBOR ; D.S. ZHELEZNOV ; O.V. PALASHOV ; E.A. KHAZANOV.** Magnetoactive media for cryogenic Faraday isolators. *J. Opt. Soc. Am. B,* 2011, vol. 28, 1409-1415

- **W.T. BOORD ; Y.H. PAO ; F.W. PHELPS ; P.C. CLASPY.** Far-infrared radiation isolator. *IEEE J. Quantum Electron.,* 1974, vol. 10, 273-279
- **B. LAX ; Y. NISHINA.** Interband Faraday Rotation in III-V Compounds. *J. Appl. Phys.,* 1961, vol. 32, 2128
- **M. CARDONA.** Electron effective masses of InAs and GaAs as a function of temperature and doping. *Phys. Rev.,* 1961, vol. 121, 752-758
- **E.D. PALIK ; S. TEITLER ; R.F. WALLIS.** Free carrier cyclotron resonance, Faraday rotation, and voigt double refraction in compound semiconductors. *J. Appl. Phys.,* 1961, vol. 32, 2132